# EUROPÄISCHE PATENTANMELDUNG

(11) **EP 3 331 115 A1**
(43) Veröffentlichungstag der Anmeldung: **06.06.2018**
(21) Anmeldenummer: 17001396.5
(22) Anmeldetag: 16.08.2017
(51) Int. Cl.: H02G 3/08, H02G 3/18

(54) **ANSCHLUSSBODENDOSE**

(30) Priorität: 01.12.2016 DE 102016014317; 16.06.2017 DE 102017005637
(71) Anmelder: PUK Group GmbH & Co. KG, 12057 Berlin (DE)
(72) Erfinder: HOFFMANN, Erwin, 54612 Nimshuscheid (DE)
(74) Vertreter: Jungblut, Bernhard Jakob

(57) **Zusammenfassung**

Die Erfindung betrifft eine Anschlussbodendose mit einem Dosenkörper (1), welcher eine obere Dosenkörperöffnung (2) mit Dosenkörperrand (3) aufweist, mit einem Bodenrahmen (4) und einer mit der Dosenkörperöffnung (2) fluchtende Rahmenöffnung (5), mit einem Auslaß- oder Abdeckelement (6), welches in die Rahmenöffnung (5) einsetzbar ist. Sie ist dadurch gekennzeichnet, dass der Bodenrahmen (4) innenliegend in der Rahmenöffnung (5) einen ersten Flanschring (8) aufweist, dass das Auslaß- oder Abdeckelement (6) einen zum ersten Flanschring (8) komplementären zweiten Flanschring (9) aufweist, und dass der erste Flanschring (8) und der zweite Flanschring (9) miteinander kommunizierende Bayonettverschlußelemente (10a, 10b) aufweisen, wobei in dem ersten Flanschring (8) oder dem zweiten Flanschring (9) eine axial gegen den ersten Flanschring (8) und den zweiten Flanschring (9) dichtend wirkende und den gesamten Flanschring (8, 9) außerhalb der Bayonettverschlußelemente (10a, 10b) geschlossen umlaufende Dichtung (13) angeordnet ist.

## Beschreibung

### Gebiet der Erfindung.

Die Erfindung betrifft eine Anschlussbodendose mit einem Dosenkörper), welcher eine obere Dosenkörperöffnung mit Dosenkörperrand aufweist, mit einem Bodenrahmen, welcher mit dem Dosenkörperrand verbunden ist, wobei der Bodenrahmen eine mit der Dosenkörperöffnung fluchtende Rahmenöffnung aufweist, und mit einem Auslaß- oder Abdeckelement, welches in die Rahmenöffnung, diese verschließend, einsetzbar ist.

### Hintergrund der Erfindung und Stand der Technik.

Bei Anschlussbodendosen stellt sich insbesondere bei Glattböden das Problem, dass Wischwasser in die Anschlussbodendose eindringen und folglich eingebaute elektrische Komponenten beschädigen kann. Dieses Problem betrifft sowohl eine geschlossene Montagestellung des Dosendeckels (der Deckel ist beispielsweise direkt in den Bodenrahmen, diesen verschließend, eingesetzt) als auch eine offene Montagestellung desselben, also eine Montagestellung, in welcher Kabel aus der Anschlussbodendose in Richtung oberhalb der Anschlussbodendose heraus- bzw. hineingeführt werden (beispielsweise durch ein in den Bodenrahmen eingesetztes Säulenteil). Als kritische Größe gilt hierbei auch eine vorgegebene Schwallhöhe von Wischwasser.

Diese Problematik einer Abdichtung gegen eindringendes Wischwasser ist bei einer Anschlussbodendose beispielsweise gemäß der Literaturstelle DE 10 2011 012 883 A1 im Prinzip sehr gut gelöst. Bei der insofern bekannten Anschlussbodendose wird ein Dosendeckel bzw. ein Säulenteil in den Bodenrahmen eingeschraubt und eine axial wirkende Ringdichtung stellt bei festem Anzug der verschraubeten Bauteile miteinander eine sehr gute Dichtheit her. So gut sich diese Anschlussbodendose in der Praxis auch bewährt hat, so wird jedoch von manchen Personen die Montage als schwierig wahrgenommen. Zum einen haben die miteinander kämmenden Gewinde einen Durchmesser, welcher etwa der Bodenrahmenöffnung entspricht, bei relativ kleiner Gewindesteigung. Dies führt mitunter zu Problemen beim Ansetzen der miteinander zu verschraubenden Bauteile, zum Verkanten und ggf. letztendlich zu einer Beschädigung von Gewindegängen. Zu anderen wird es mitunter als aufwändig bzw. zeitraubend angesehen, die miteinander zu verschraubenden Bauteile um eine Mehrzahl von Umdrehungen zu verdrehen. Schließlich, im Falle des Einsatzes eines Säulenteils mit daran angebrachten elektrischen Buchsen, stört die Mehrzahl von Umdrehungen, da damit innerhalb der Anschlussbodendose angeordnete elektrische Leitungen in unerwünschter Weise verdrillt werden.

### Technisches Problem der Erfindung.

Der Erfindung liegt daher das technische Problem zu Grunde, eine Anschlussbodendose anzugeben, welche nicht nur in jeder Montagestellung des Dosendeckels eine gute Sicherheit gegen das Eindringen von Wischwasser gewährleistet, sondern wobei zusätzlich zu der Waserrdichtheit auch ein Dosendeckel einfach, schnell und verkantungsfrei zu montieren ist und ein Säulenteil mit daran angebrachten elektrischen Buchsen verdrillfrei in den Bodenrahmen eingesetzt werden kann.

### Grundzüge der Erfindung und bevorzugte Ausführungsformen.

Zur Lösung dieses technischen Problems lehrt die Erfindung, dass der Bodenrahmen innenliegend in der Rahmenöffnung einen ersten Flanschring aufweist, dass das Auslaß- oder Abdeckelement einen zum ersten Flanschring komplementären zweiten Flanschring aufweist, und dass der erste Flanschring und der zweite Flanschring miteinander kommunizierende Bayonettverschlußelemente aufweisen, wobei in dem ersten Flanschring oder dem zweiten Flanschring eine axial gegen den ersten Flanschring und den zweiten Flanschring dichtend wirkende und den gesamten Flanschring außerhalb der Bayonettverschlußelemente geschlossen umlaufende Dichtung angeordnet ist.

Die Anzahl der Paare der miteinander kommunizierenden Beyonettverschlusselemente kann beispielsweise 2 bis 10 betragen, vorzugsweise 3 bis 4. Zweckmäßigerweise sind diese Paare entlang des Umfangs der beiden Flanschringe äquidistant verteilt. Es ist aber eben möglich, Abstände zwischen verschiedenen Paaren entlang des Umfangs der beiden Flanschringe unterschiedlich auszuführen, insbesondere wenn es erwünscht ist, dass das Auslaß- ode Abdeckelement nur in einer vorgegebenen Drehposition relativ zum Bodenrahmen einsetzbar ist.

Das Auslaß- oder Abdeckelement kann eine Kabelauslaßaussparung oder einen Anschlussbuchsenträger aufweisen.

Das Auslaß- oder Abdeckelement kann als Dosendeckel oder Säulenteil ausgebildet sein, wobei der Dosendeckel und/oder das Säulenteil mittels der Bayonettverschlußelemente in den Bodenrahmen einsetz- und fixierbar sein.

Das Saulenteil kann an einem ersten Ende den ersten Säulenteilflanschring und an einem zweiten Ende einen zweiten Säulenteilflanschring aufweisen, wobei der erste Säulenteilflanschring komplementär zum ersten Flanschring und der zweite Säulenteilflanschring komplementär zum zweiten Flanschring eines Dosendeckels sind, wobei der erste und optional der zweite Säulenteilflanschring mit den Bayonettverschlußelementen des ersten und des zweiten Flanschrings kommunizierende Bayonettschlußelemente aufweisen, wobei der erste Säulenteilflanschring den zweiten Flanschring bildet.

Selbstverständlich kann das Säulenteil einen einstückig integrierten oder separat zur Verfügung gestellten Säulenteildeckel aufweisen, dann wird bei Einsatz des Säulenteils in den Bodenrahmen der Dosendeckel nicht benötigt. Ein solcher Säulenteildeckel kann alternativ zu der vorstehenden Variante mit Bayonettverschlußelementen in das Säulenteil einfach eingesteckt, eingeschraubt, oder sonstwie ein- oder angesetzt sein.

Mit der Erfindung wird zunächst erreicht, dass sowohl bei in den Bodenrahmen eingesetztem Dosendeckel oder Säulenteil (beide zusammen als Auslaß- oder Abdeckelement bezeichnet, auch ein Dosendeckel kann mit vorzugsweise wasserdicht angebrachten elektrischen Buchsen oder Anschlüssen versehen sein) eine hervorragende Dichtheit gegenüber außen anstehendem Wasser erreicht wird. Dies wird durch die außerhalb der Bayonettverschlußelemente umlaufende Dichtung erreicht. Hierbei ist die erste Alternative, Anordnung der Dichtung im ersten Flanschring, gegenüber der zweiten Alternative, Anordnung von Dichtungen im zweiten Flanschring, bevorzugt.

Eine gewünschte Schwallhöhe läßt sich unschwer dadurch einrichten, dass das Säulenteil entsprechend hoch gestaltet wird und die Kabelauslassaussparung bzw. elektrische Buchsen oder sonstige Anschlüsse in oder an dem Säulenteil in entsprechender Höhe über der Oberseite des Bodenrahmens angeordnet wird. Dieses Mass liegt zweckmäßigerweise im Bereich von 0,5 bis 10 cm, vorzugsweise in Bereich von 1 bis 4 cm. Die Untergrenze des Bereiches liegt weiterhin vorzugsweise bei 1 oder 2 cm.

Zum Zweiten wird erreicht, dass der Dosendeckel einfach und leicht in den Bodenrahmen einsetz- und darin fixierbar ist; Gleiches gilt für den Einsatz des Säulenteils in den Bodenrahmen. In letzterem Fall wird ein Verdrillen von Kabeln im Inneren der Anschlussbodendose praktisch vollständig vermieden. Denn aufgrund der Einrichtung der zueinander komplementären Bayonettverschlußelemente erfolgen ein Einsatz verkantungsfrei und die Fixierung mit einer Drehung nur geringen Winkels. Zweckmäßigerweise sind die Bayonettverschlußelemente so ausgebildet, dass die Drehung zur Fixierung über einen Winkel von weniger als 20°, insbesondere weniger als 10°, erfolgt.

Im Einzelnen bestehen die folgenden Möglichkeiten der weiteren Ausbildung.

Der Bodenrahmen und der Dosendeckel können in einer ersten Montageposition, in welcher der Dosendeckel direkt in den Bodenrahmen eingesetzt ist, eine geschlossene obere Oberfläche bilden. In einer optionalen zweiten Montageposition können das Säulenteil in den Bodenrahmen und der Dosendeckel in das Säulenteil eingesetzt sein, wobei der Dosendeckel von dem Bodenrahmen beabstandet mit dazwischen liegender Kabelauslaßaussparung angeordnet ist.

Die Dichtung ist vorteilhafterweise als Dichtring, insbesondere als O-Ring, aus einem gummielastischen Werkstoff ausgebildet und in einer Dichtringnut angeordnet, welche in einer Stirnfläche vorzugsweise des ersten Flanschrings eingerichtet ist.

Der Dosendeckel kann zumindest eine Betätigungsausnehmung zur Drehbetätigung des Dosendeckels aufweisen. Diese kann beispielsweise durch eine in der Drehachse des Dosendeckels angeordnete Ausnehmung mit nicht-rundem Querschnitt (orthogonal zur Drehachse des Dosendeckels), beispielsweise als Innensechskant ausgebildet sein. Hierin ist dann ein Werkzeug, beispielsweise ein Schlüssel, formschlüssig einsetz- und drehend betätigbar. Selbstverständlich sind hier auch andere Querschnittformen denkbar. Insbesondere kann die Querschnittsform individualisiert ausgebildet sein. Dann kann der Dosendeckel nur mit einem passenden und formschlüssig in die individualisierte Betätigungsausnehmung eingreifenden Schlüssel, welcher dem individualisierten Querschnitt angepasst ist, betätigt werden, da nicht passende Schlüssel nicht in die die Betätigungsausnehmung einführbar sind, oder sich darin frei drehen, ohne den Dosendeckel mitzunehmen. So lassen sich beispielsweise die Dosendeckel aller Bodendosen in einem Gebäude gegen eine Betätigung mit einem Schlüssel aus einem anderen Gebäude sichern. Ebenso ist es möglich, zwei oder mehr außerhalb der Drehachse des Dosendeckels angeordnete Betätigungsausnehmungen vorzusehen, hierbei wird der Abstand zur Drehachse zweckmäßgerweise für die Betätigungsausnehmungen gleich sein.

Grundsätzlich können die Bayonettverschlußelemente beliebig ausgeführt sein. Beispielsweise eignen sich Bayonettverschlußelemente analog einem Objektivbayonett. Baulich und herstellungstechnisch einfach sind miteinander kommunizierenden Bayonettverschlußelemente mit einer im Wesentlichen schlüssellochförmige Verschlußausnehmung, aufweisend eine Einführöffnung und einen Halteschlitz, sowie mit einer im Wesentlichen schraubenkopfförmige Verschlußnase mit einem Verschlußnasenkopf. Die Verschlußnasenkopf ist durch die Einführöffnung einführbar und hintergreift den Halteschlitz. In einer anderen Variante ist die Verschlußausnehmung ein einfaches Langloch (ggf. mit kreissegmentförmiger Mittellinie), während die Verschlußnase einen länglichen Verschlußnasenkopf trägt, welcher in Richtung des Langlochs und parallel hierzu orientiert ist und dessen Länge gleich oder kleiner der Länge des Langloches ist. Zueinander komplementäre Flanschringe tragen in dem einen Flanschring die Verschlußausnehmung und an dem anderen Flanschring die Verschlußnase. Konkret ist es bevorzugt, wenn der erste Flanschring und der zweite Säulenteilflanschring die Verschlußausnehmung und der zweite Flanschring und der erste Säulenteilflanschring die Verschlußnase tragen.

Im Einzelnen kann es eingerichtet sein, dass die Dicke des Halteschlitzes von der Einführöffnung weg zunehmend ausgebildet ist. Hierdurch wird der Dosendeckel bei Verdrehen bzw. Fixieren in axialer Richtung zum Bodenrahmen gezogen und so die Dichtung dichtend komprimiert. Entsprechendes gilt bei Verdrehen bzw. Fixieren des Säulenteils in dem Bodenrahmen. In diesem Zusammenhang kann vorgesehen sein, dass rückseitig im Halteschlitz und beabstandet von der Einführöffnung eine Rastvertiefung angeordnet ist. Beim Verdrehen bzw. Fixieren "fällt" dann der Verschlußnasenkopf in diese Rastvertiefung und sichert so den Dosendeckel bzw. das Säulenteil gegen unbeabsichtigtes Drehen aus der Festposition in eine Löseposition der Byonettverschlußverbindung. Eine solche Rastvertiefung ist aber nicht notwendigerweise erforderlich. Eben so gut kann vorgesehen sein, dass die Dicke des Halteschlitzes von der Einführöffnung weg und beabstandet von der Einführöffnung in einem Endhaltebereich konstant ausgeführt ist. In der vorstehend beschriebenen Alternative mit Langloch und länglichem Verschlußnasenkopf kann der Verschlußnasenkopf im Bereich seines freien Endes leicht vom Flanschring weg gebogen sein, wodurch ebenfalls eine Schräge gebildet wird, mittels welcher die beiden Flanschringe zueinander gedrückt werden, so die dazwischen wirkende Dichtung leicht komprimierend.

Weiterhin bevorzugs ist es, wenn in oder an dem Säulenteil elektrische Anschlußeinheiten und/oder sonstige elektrische Anschlüsse befestigt sind (innen- oder außenseitig der Wandung des Säulenteils, oder hierin integriert). Beispiele für Anschlusseinheiten sind Schukobuchsen, Buchsen der Telekommunikationstechnik oder der Datentechnik.

Eine erfindungsgemäße Anschlussbodendose bzw. deren Bauteile können grundsätzlich aus jeden beliebigen und für die Führung von elektrischen Leitungen des Haushaltsnetzes und der Datenverarbeitung geeigneten Werkstoffen, sowohl auf Basis metallischer Werkstoffe als auch auf Basis von Kunststoffen gestaltet sein. Alle Bauteile können aus gleichen oder aus verschiedenen Werkstoffen gefertigt sein. Bevorzugt ist es, wenn der Dosenkörper aus einem Kunststoff und der Bodenrahmen, der Dosendeckel und das Säulenteil aus einem Metall, beispielsweise einer Aluminiumlegierung, gefertigt werden.

Der Dosenkörper kann beliebig ausgeführt sein. Typischerweise wird es sich um einen becher- oder wannenförmigen Dosenkörper handeln, durch dessen seitliche Wandungen Kabel in im Wesentlichen horizontaler Richtung in das Innere des Dosenkörpers einführen lassen. Im Inneren des Dosenkörpers kann ein Zwischenboden eingerichtet sein, in bzw. auf welchem Zwischenboden elektrische Anschlusseinheiten montiert sein können, sofern diese nicht im Säulenteil vorgesehen sind.

Der Bodenrahmen kann mit dem Dosenkörper einstückig oder (vorzugsweise) mehrstückig ausgebildet sein. In letzterem Falle kann der Bodenrahmen mit dem Dosenkörper mittels Befestigungsschrauben verschraubbar sein. Hierzu weist der Bodenrahmen Befestigungsbohrungen und der Dosenkörper Befestigungsbuchsen (geringeren Durchmessers) auf.

In einer Variante der Erfindung ist vorgesehen, dass die Bayonettverschlusselemente radial zu einer gemeinsamen Achse des ersten Flanschrings und des zweiten Flanschrings vorstehende Bayonettstifte sowie im wesentlichen L-förmige Bayonettausnehmungen umfassen.

Die Bayonettstifte können auf dem zweiten Flanschring angeordnet sein und radial nach außen über dem zweiten Flanschring hervor stehen, und die Bayonettausnehmungen können im ersten Flanschring angeordnet und radial nach innen sowie nach oben offen sein. Ebenso ist aber grundsätzlich möglich, die Bayonettstifte in dem ersten Flanschring radial nach innen vorstehend anzuordnen. Dann sind die Bayonettausnehmungen im zweiten Flanschring radial nach außen sowie nach unten und vorzugsweise auch nach oben offen.

Vorteilhafterweise trägt das Auslaß- oder Abdeckelement ein Säulenteil, dessen Außendurchmesser kleiner als der Innendurchmesser des ersten Flanschrings ist. Die ermöglicht es, das Auslaß- oder Abdeckelement in zwei Positionen in den Bodenrahmen einzusetzen, einmal mit nach oben vorstehendem Säulenteil, einmal mit nach innen in die Anschlussbodendose hinein ragendem Säulenteil. Dabei wird es zweckmäßig sein, wenn die Bayonettstifte in axialer Richtung mittig des zweiten Flanschrings angebracht sind.

Vorteilhafterweise trägt das Säulenteil in den Bereichen der axialen Enden jeweils ein gleiches Innengewinde trägt. Dann kann ein im Wesentlichen scheibenförmiger Dosendeckel vorgesehen sein, welcher auf seinem Außenumfang ein Außengewinde trägt, welches mit den beiden Innengewinden kämmt. Dann läßt sich der Dosendeckel in beide Enden des Säulenteils einschrauben. Hierbei wird es sich empfehlen, dass zumindest zwischen dem dem ersten Flanschring nahen Ende des Säulenteil und dem Dosendeckel eine axial wirkende Dichtung, beispielsweise in einer Dichtfläche des Säulenteils eingelegt, vorgesehen ist. Dabei ist es zweckmäßig, wenn die Dichtfläche gegenüber der Stirnfläche des Säulenteils zurück gesetzt ist, in zwar etwa um die Dicke des Dosendeckels. So wird erreicht, dass der Dosendeckel mit beiden Enden des Säulenteils planar abschließt.

Im Folgenden wird die Erfindung anhand von lediglich ein Ausführungsbeispiel darstellenden Figuren näher erläutert. Es zeigen:
- Fig. 1: einen Seitenquerschnitt einer erfindungsgemäßen Anschlussbodendose in einer ersten Montagestellung,
- Fig. 2:: eine Seitenquerschnitt einer erfindungsgemäßen Anschlussbodendose in einer zweiten Montagestellung, und
- Fig. 3:: eine Aufsicht auf einen Bodenrahmen,
- Fig. 4:: eine Aufsicht auf Unterseite eines Dosendeckels,
- Fig. 5:: eine Detailansicht im Querschnitt im Bereich von Bayonettverschlusselementen in verschiedenen Positionen (Fig. 5a und Fig. 5b) und
- Fig. 6:: eine alterntive Variante des Gegenstandes der Figur 5.
- Fig. 7:: eine Variante einer erfindungsgemäßen Anschlussbodendose in verschiedenen Ansichten

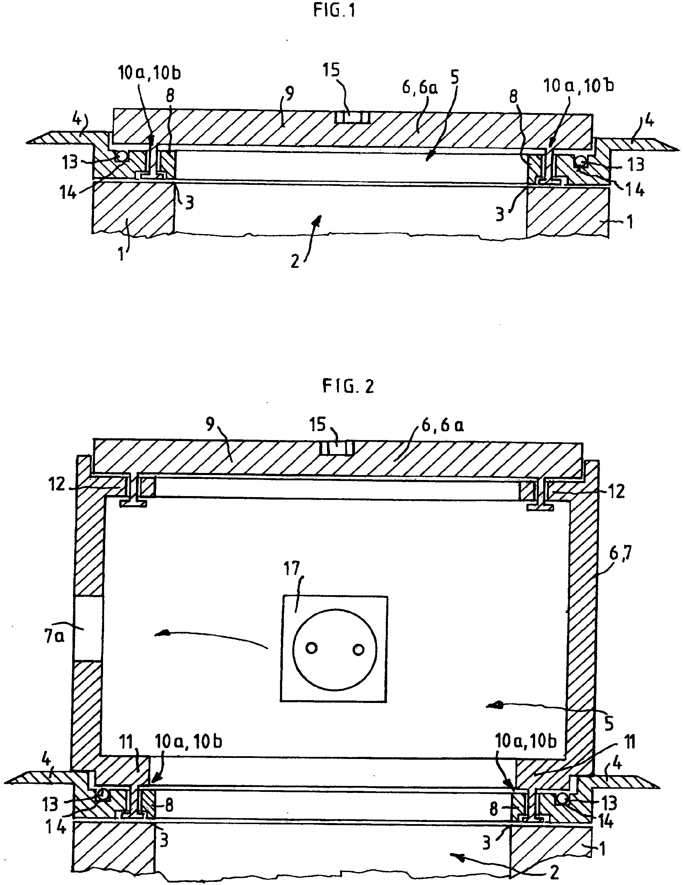

In den Figuren 1 und 2 erkennt man eine erfindungsgemäße Anschlussbodendose mit einem Dosenkörper 1, welcher eine obere Dosenkörperöffnung 2 mit Dosenkörperrand 3 aufweist, mit einem Bodenrahmen 4, welcher mit dem Dosenkörperrand 3 verbunden ist, wobei der Bodenrahmen 4 eine mit der Dosenkörperöffnung 2 fluchtende Rahmenöffnung 5 aufweist. In der Figur 1 ist als Auslaß- oder Abdeckelement 6 ein Dosendeckel 6, 6a, welcher in die Rahmenöffnung 5, diese verschließend, einsetzbar ist, ersichtlich. Die Figur 2 zeigt als Auslass- oder Abdeckelement 6, ein sich im Wesentlichen orthogonal zum Bodenrahmen 4 erstreckendes Säulenteil 6, 7 (Fig. 2) mit zumindest einer Kabelauslaßaussparung 7a. An Stelle der Kabelauslaßaussparung 7a können auch eine oder mehrere elektrische Buchsen 17 oder sonstige Anschlüsse vorgesehen sein. In der Figur 1 sind keine elektrischen Leitungen aus der Bodendose herauszuführen, während die Darstellung der Figur 2 die Erfindung bei herauszuführenden elektrischen Leitungen bzw. in das Säulenteil 6, 7 integrierter Buchse 17 zeigt.

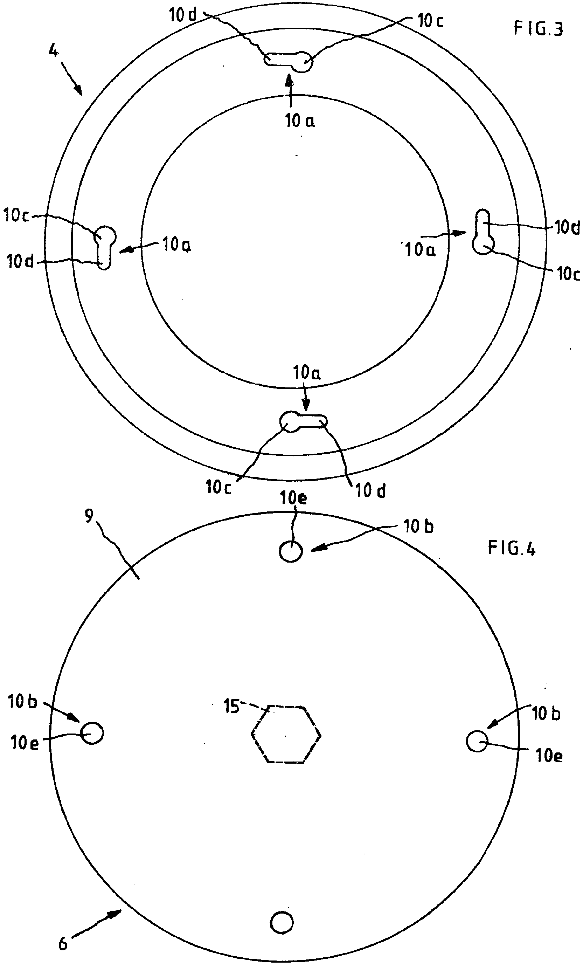

In beiden Figuren 1 und 2 erkennt man, dass der Bodenrahmen 4 innenliegend in der Rahmenöffnung 5 einen ersten Flanschring 8 aufweist. Der Dosendeckel 6, 6a weist einen zum ersten Flanschring 8 komplementären zweiten Flanschring 9 auf. Der erste Flanschring 8 und der zweite Flanschring 9 weisen miteinander kommunizierende Bayonettverschlußelemente 10a, 10b auf, welche im Detail in den Figuren 3 bis 5 dargestellt sind.

Wie in der Figur 2 ersichtlich, weist das Saulenteil 6, 7 an einem ersten Ende eine ersten Säulenteilflanschring 11 und an einem zweiten Ende einen zweiten Säulenteilflanschring 12 auf, wobei der erste Säulenteilflanschring 11 komplementär zum ersten Flanschring 8 und der zweite Säulenteilflanschring 12 komplementär zum zweiten Flanschring 9 sind. So läßt sich das Säulenteil 6, 7 wahlweise zwischen Bodenrahmen 4 und Dosendeckel 6 gleichsam zwischenschalten oder dazwischen entfernen. Dazu weisen der erste und der zweite Säulenteilflanschring 11, 12 mit den Bayonettverschlußelementen 10a, 10b des ersten und des zweiten Flanschrings 8, 9 kommunizierende Bayonettschlußelemente 10a, 10b auf. Alternativ kann auch vorgesehen sein, dass ein Säulenteildeckel auf beliebige andere Weise in das Säulenteil 6, 7 eingesetzt wird. An Stelle eines Säulenteildeckels können auch stirnseitig, oben, des Säulenteils 6, 7 elektrische Buchsen 17 oder sonstige elektrische Anschlüsse vorgesehen sein.

Beiden Figuren 1 und 2 ist entnehmbar, dass im ersten Flanschring 8 eine außerhalb der Bayonettverschlußelemente 10a, 10b umlaufende Dichtung 13 in Form eines O-Ringes 13 in einer Dichtringnut 14 angeordnet ist, welche in einer Stirnfläche des ersten Flanschrings 8 eingerichtet ist.

Der Figur 1 wiederum ist entnehmbar, dass der Bodenrahmen 4 und der Dosendeckel 6 in einer ersten Montageposition, in welcher der Dosendeckel 6 direkt in den Bodenrahmen 4 eingesetzt ist, eine geschlossene obere Oberfläche bilden. In einer zweiten Montageposition (Fig. 2) sind das Säulenteil 7 in den Bodenrahmen 4 und der Dosendeckel 6 in das Säulenteil 7 eingesetzt, wobei der Dosendeckel 6 von dem Bodenrahmen 4 beabstandet mit dazwischen liegender Kabelauslaßaussparung 7a angeordnet ist.

Der Fig. 4 ist entnehmbar, dass der Dosendeckel 6 eine Betätigungsausnehmung 15, in Beispiel als Innensechskant, zur Drehbetätigung des Dosendeckels 6 aufweist. Die Betätigungsausnehmung 15 ist dabei nicht durch den Dosendeckel 6 durchgehend ausgebildet, sondern endet vor der Unterseite des Dosendeckels 6 und ist deshalb gestrichelt gezeichnet (siehe auch Fig. 1).

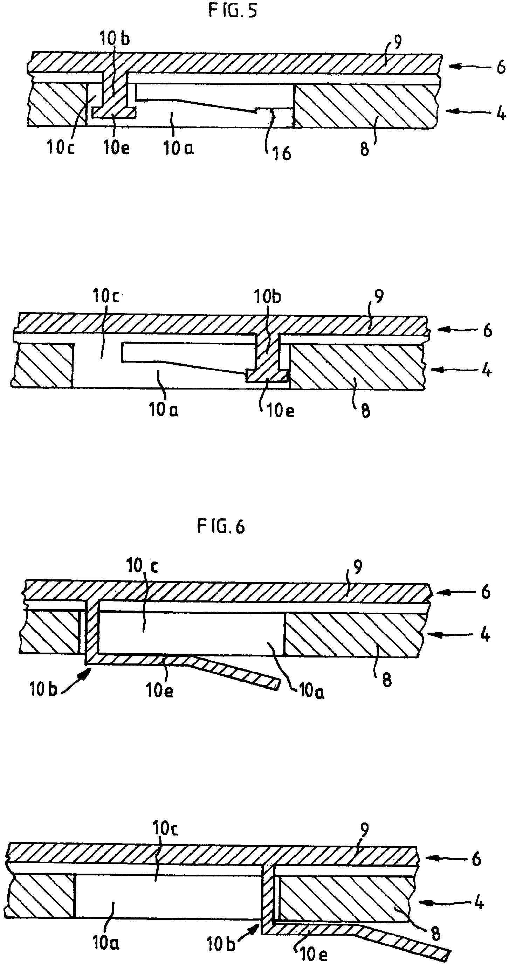

Einer vergleichenden Betrachtung der Figuren 3 bis 6 ist zu entnehmen, dass die miteinander kommunizierenden Bayonettverschlußelemente 10a, 10b eine im Wesentlichen schlüssellochförmige Verschlußausnehmung 10a mit einer Einführöffnung 10c und einem Halteschlitz 10d sowie eine im Wesentlichen schraubenkopfförmige Verschlußnase 10b mit einem Verschlußnasenkopf 10e aufweisen, wobei die Verschlußnasenkopf 10e durch die Einführöffnung 10c einführbar ist und den Halteschlitz 10d hintergreift. Dabei ist die Dicke des Halteschlitzes 10d von der Einführöffnung 10c weg zunehmend ausgebildet. Optional ist rückseitig im Halteschlitz 10d und beabstandet von der Einführöffnung 10c eine Rastvertiefung 16 angeordnet, welche aber entbehrlich ist. Eine Alternative hierzu ist in der Figur 6 dargestellt, in welcher die miteinander kommunizierenden Bayonettverschlußelemente 10a, 10b eine als Langloch ausgeführte Einführöffnung 10c und eine Verschlußnase 10b mit einem länglichen Verschlußnasenkopf 10e aufweisen. Der Verschußnasenkopf 10e ist dabei vom Flanschring 9 des Dosendeckels 6 im Bereich seines freien Endes vom Flanschring 9 weg gebogen, wodurch ein ähnlicher Spanneffekt erzielt wird, wie vorstehend für den Halteschlitz der Figur 5 beschrieben.

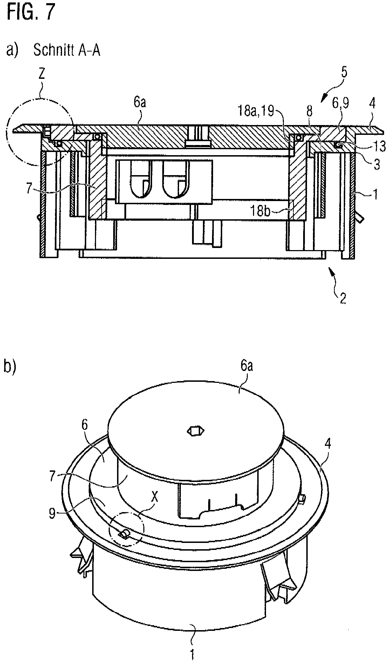

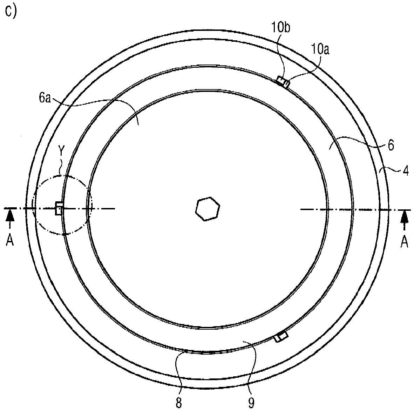

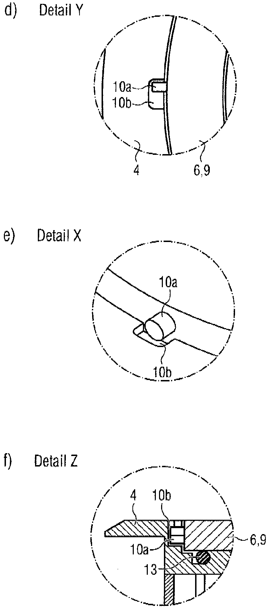

In der Variante der Figur 7 erkennt man, dass die Bayonettverschlusselemente 10a, 10b radial zu einer gemeinsamen Achse des ersten Flanschrings 8 und des zweiten Flanschrings 9 vorstehende Bayonettstifte 10a sowie im wesentlichen L-förmige Bayonettausnehmungen 10b umfassen.

Die Bayonettstifte 10a sind auf dem zweiten Flanschring 9 angeordnet und stehen radial nach außen über dem zweiten Flanschring hervor. Die Bayonettausnehmungen 10b sind im ersten Flanschring angeordnet und radial nach innen sowie nach oben offen.

Das Auslaß- oder Abdeckelement 6 trägt ein Säulenteil 7, dessen Außendurchmesser kleiner als der Innendurchmesser des ersten Flanschrings 8 ist. Das Säulenteil trägt in den Bereichen der axialen Enden jeweils ein gleiches Innengewinde 18a, 18b. Es ist ein im Wesentlichen scheibenförmiger Dosendeckel 6a vorgesehen, welcher auf seinem Außenumfang ein Außengewinde 19 trägt, welches mit den beiden Innengewinden 18a, 18b kämmt.

## Patentansprüche

1. Anschlussbodendose mit einem Dosenkörper (1), welcher eine obere Dosenkörperöffnung (2) mit Dosenkörperrand (3) aufweist,
mit einem Bodenrahmen (4), welcher mit dem Dosenkörperrand (3) verbunden ist, wobei der Bodenrahmen (4) eine mit der Dosenkörperöffnung (2) fluchtende Rahmenöffnung (5) aufweist, und
mit einem Auslaß- oder Abdeckelement (6), welches in die Rahmenöffnung (5), einsetzbar ist,
**dadurch gekennzeichnet,**
**dass** der Bodenrahmen (4) innenliegend in der Rahmenöffnung (5) einen ersten Flanschring (8) aufweist,
**dass** das Auslaß- oder Abdeckelement (6) einen zum ersten Flanschring (8) komplementären zweiten Flanschring 9 aufweist, und
**dass** der erste Flanschring (8) und der zweite Flanschring (9) miteinander kommunizierende Bayonettverschlußelemente (10a, 10b) aufweisen,
wobei in dem ersten Flanschring (8) oder dem zweiten Flanschring (9) eine axial gegen den ersten Flanschring (8) und den zweiten Flanschring (9) dichtend wirkende und den gesamten Flanschring (8, 9) außerhalb der Bayonettverschlußelemente (10a, 10b) geschlossen umlaufende Dichtung (13) angeordnet ist.

2. Anschlussbodendose nach Anspruch 1, **dadurch gekennzeichnet, dass** das Auslaß- oder Abdeckelement (6) eine Kabelauslaßaussparung (7a) oder einen Anschlussbuchsenträger (7b) aufweist.

3. Anschlussbodendose nach Anspruch 1 oder 2, **dadurch gekennzeichnet, dass** das Auslaß- oder Abdeckelement (6) als Dosendeckel (6a) oder Säulenteil (7) ausgebildet ist, wobei der Dosendeckel (6a) und/oder das Säulenteil (7) mittels der Bayonettverschlußelemente (10a, 10b) in den Bodenrahmen (4) einsetz- und fixierbar sind.

4. Anschlussbodendose nach Anspruch 3, **dadurch gekennzeichnet, dass** das Saulenteil (7) an einem ersten Ende den ersten Säulenteilflanschring (9, 11) und an einem zweiten Ende einen zweiten Säulenteilflanschring (12) aufweist, wobei der erste Säulenteilflanschring (11) komplementär zum ersten Flanschring (8) und der zweite Säulenteilflanschring (12) komplementär zum zweiten Flanschring (9) eines Dosendeckels (6a) sind, wobei der erste und optional der zweite Säulenteilflanschring (11, 12) mit den Bayonettverschlußelementen (10a, 10b) des ersten und des zweiten Flanschrings (8, 9) kommunizierende Bayonettschlußelemente (10a, 10b) aufweisen, wobei der erste Säulenteilflanschring (9, 11) den zweiten Flanschring (9, 11) bildet.

5. Anschlussbodendose nach Anspruch 3, **dadurch gekennzeichnet, dass** der Bodenrahmen (4) und der Dosendeckel (6a) in einer ersten Montageposition, in welcher der Dosendeckel (6a) direkt in den Bodenrahmen (4) eingesetzt ist, eine geschlossene obere Oberfläche bilden und dass in einer optionalen zweiten Montageposition das Säulenteil (7) in den Bodenrahmen (4) und der Dosendeckel (6a) in das Säulenteil (7) eingesetzt ist, wobei der Dosendeckel (6a) von dem Bodenrahmen (4) beabstandet mit dazwischen liegender Kabelauslaßaussparung (7a) angeordnet ist.

6. Anschlussbodendose nach einem der Ansprüche 1 bis 5, **dadurch gekennzeichnet, dass** die Dichtung (13) als Dichtring (13) ausgebildet und in einer Dichtringnut (14) angeordnet ist, welche in einer Stirnfläche des ersten Flanschrings (8) eingerichtet ist.

7. Anschlussbodendose nach einem der Ansprüche 1 bis 6, **dadurch gekennzeichnet, dass** der Dosendeckel (6a) zumindest eine Betätigungsausnehmung (15) zur Drehbetätigung des Dosendeckels (6a) aufweist.

8. Anschlussbodendose nach einem der Ansprüche 1 bis 7, **dadurch gekennzeichnet, dass** die miteinander kommunizierenden Bayonettverschlußelemente (10a, 10b) eine im Wesentlichen schlüssellochförmige Verschlußausnehmung (10a) mit einer Einführöffnung (10c) und einem Halteschlitz (10d) sowie mit einen im Wesentlichen schraubenkopfförmige Verschlußnase (10b) mit einem Verschlußnasenkopf (10e) aufweisen, wobei die Verschlußnasenkopf (10e) durch die Einführöffnung (10c) einführbar ist und den Halteschlitz (10d) hintergreift.

9. Anschlussbodendose nach Anspruch 8, **dadurch gekennzeichnet, dass** die Dicke des Halteschlitzes (10d) von der Einführöffnung (10c) weg zunehmend ausgebildet ist und/oder dass rückseitig im Halteschlitz (10d) und beabstandet von der Einführöffnung (10c) eine Rastvertiefung (16) oder keine Rastvertiefung (16) angeordnet ist.

10. Anschlussbodendose nach einem der Ansprüche 1 bis 10, **dadurch gekennzeichnet, dass** in oder an dem Säulenteil (7) elektrische Buchsen (17) und sonstige elektrische Anschlüsse angeordnet und/oder befestigt sind.

11. Anschlussbodendose nach einem der Ansprüche 1 bis 10, **dadurch gekennzeichnet, dass** die Bayonettverschlusselemente (10a, 10b) radial zu einer gemeinsamen Achse des ersten Flanschrings (8) und des zweiten Flanschrings (9) vorstehende Bayonettstifte (10a) sowie im wesentlichen L-förmige Bayonettausnehmungen (10b) umfassen.

12. Anschlussbodendose nach Anspruch 11, **dadurch gekennzeichnet, dass** die Bayonettstifte (10a) auf dem zweiten Flanschring (9) angeordnet sind und radial nach außen über dem zweiten Flanschring hervor stehen, und dass die Bayonettausnehmungen (10b) im ersten Flanschring angeordnet und radial nach innen sowie nach oben offen sind.

13. Anschlussbodendose nach Anspruch 11 oder 12, **dadurch gekennzeichnet, dass** das Auslaß- oder Abdeckelement (6) ein Säulenteil (7) trägt, dessen Außendurchmesser kleiner als der Innendurchmesser des ersten Flanschrings (8) ist.

14. Anschlussbodendose nach Anspruch 13, **dadurch gekennzeichnet, dass** das Säulenteil in den Bereichen der axialen Enden jeweils ein gleiches Innengewinde (18a, 18b) trägt.

15. Anschlussbodendose nach Anspruch 13 oder 14, **dadurch gekennzeichnet, dass** ein im Wesentlichen scheibenförmiger Dosendeckel (6a) vorgesehen ist, welcher auf seinem Außenumfang ein Außengewinde (19) trägt, welches mit den beiden Innengewinden (18a, 18b) kämmt.
